# EUROPEAN PATENT APPLICATION

(11) **EP 4 498 476 A1**
(43) Date of publication of application: **29.01.2025**
(21) Application number: 24189615.8
(22) Date of filing: 19.07.2024
(51) Int. Cl.: H01M 10/42, H01M 50/105

(54) **BATTERY PACK**

(30) Priority: 21.07.2023 KR 20230095492; 22.03.2024 KR 20240039801
(71) Applicant: SAMSUNG SDI CO., LTD., Giheung-gu Yongin-si, Gyeonggi-do 17084 (KR)
(72) Inventor: An, Kangsik, 17084 Yongin-si, Gyeonggi-do (KR)
(74) Representative: Gulde & Partner

(57) **Abstract**

A battery pack includes a battery cell, and a protection circuit module connected to the battery cell, the protection circuit module including a substrate, wherein the battery cell includes an electrode assembly, and a housing surrounding the electrode assembly, the housing including a terrace portion corresponding to a short side portion of the battery cell, a pair of side sealing portions respectively connected to both ends of the terrace portion and corresponding to a pair of long side portions of the battery cell, and a pair of corner portions at a connection portion between the pair of side sealing portions and the terrace portion if the pair of side sealing portions and the terrace portion are respectively folded and the substrate is between the pair of corner portions.

## Description

### BACKGROUND

### 1. Field

One or more embodiments relate to a battery pack.

### 2. Description of the Related Art

Secondary batteries may be batteries designed to be capable of being charged and discharged and may be used as energy sources for mobile devices, electric vehicles, hybrid vehicles, electric bicycles, uninterruptible power supplies, and the like. The secondary batteries may be used in the form of single battery cells or in the form of modules or packs in which a plurality of battery cells are connected and grouped into one unit, according to types of external apparatuses applied.

The above-described information provided in the technology that serves as the background of the disclosure is only for improving understanding of the background of the disclosure.

### SUMMARY

The present disclosure relates to a battery pack, including a battery cell and a protection circuit module connected to the battery cell. The protection circuit module includes a substrate, wherein the battery cell includes an electrode assembly, and a housing surrounding the electrode assembly, the housing including a terrace portion corresponding to a short side portion of the battery cell, a pair of side sealing portions respectively connected to both ends of the terrace portion and corresponding to a pair of long side portions of the battery cell, and a pair of corner portions at a connection portion between the pair of side sealing portions and the terrace portion if the pair of side sealing portions and the terrace portion are respectively folded and the substrate is between the pair of corner portions. In result, the battery pack is miniaturized by reducing the total size thereof including a length thereof. In addition, interference between other components of the battery pack and a protection circuit module may be reduced.

The pair of side sealing portions may be folded toward a side surface of the battery cell, the terrace portion may be folded toward a surface of the battery cell from which an electrode tab is withdrawn, and the connection portion between the terrace portion and the pair of side sealing portions may be folded toward the terrace portion.

The terrace portion and the pair of side sealing portions may be folded while the connection portion between the terrace portion and the pair of side sealing portions may be unfolded or uncut, resulting in the pair of corner portions.

The terrace portion and the pair of side sealing portions may perpendicularly cross each other. In other words, the terrace portion and the pair of side sealing portions may be aligned perpendicular to each other.

Each corner portion of the pair of corner portions may include a first edge, a second edge opposite to the first edge, and a connection portion connected to the first edge and the second edge, wherein at least a portion of each of the first edge, the second edge, and the connection portion may be (positioned) on the terrace portion. In other words, at least a portion of each of the first edge, the second edge, and the connection portion may be in direct contact with the terrace portion.

The at least a portion of each of the first edge, the second edge and the connection portion, may include an entirety of the first edge and an entirety of the connection portion. In other words, the first edge and the connection portion may be entirely in direct contact with the terrace portion, and at least a portion of the second edge may also be in direct contact with the terrace portion. As a result, the corner portion may be more stably supported on the terrace portion.

The first edge, the second edge, and the connection portion may together have a triangular shape. Therefore, the area of the corner portion protruding outside the terrace portion can be reduced, and the corner portion can be prevented from interfering with other components when the battery pack is packaged.

Each of the pair of corner portions may have a shape with a width gradually decreasing toward both ends of the substrate.

The pair of corner portions may be folded toward the terrace portion and a folded portion thereof may have an externally curved shape, and the housing may further include a space between an upper surface of the terrace portion and the pair of corner portions. Therefore, the first tape covering the corner portion can be securely attached along the curvature of the corner portion without lifting or wrinkling.

The battery pack may further include at least one tape attached to one or more of the battery cell and the protection circuit module, wherein the at least one tape supports and protects the one or more of the battery cell and the protection circuit module, and wherein the at least one tape includes a pair of first tapes respectively attached to both side surfaces of the battery cell and respectively covering the pair of corner portions. The battery pack may further include at least one tape attached to at least one (both) of the battery cell and the protection circuit module, and wherein the at least one tape includes a pair of first tapes respectively attached to both side surfaces of the battery cell and respectively covering the pair of corner portions.

The pair of first tapes may each be spaced apart from respective ends of the substrate. Therefore, the first tape, which is used to protect the corner portion and other components of the battery pack, can prevent interference with the substrate due to impacts or vibrations.

End portions of the pair of first tapes may protrude toward respective ends of the substrate further than end portions of the pair of corner portions.

Respective distances between end portions of the pair of first tapes and both end portions of the substrate may be less than respective distances between end portions of the pair of corner portions and the end portions of the pair of first tapes. In other words, the pair of first tapes can completely cover the corner portion without interfering with both ends of the substrate.

The battery cell may further include an electrode tab extending from the electrode assembly, the electrode tab may include a plurality of bending portions and at least a portion of the protection circuit module may be between the plurality of bending portions. In other words, the electrode tab is not extended in a single direction but is bent according to the bending directions of the plurality of bending portions, allowing the size of the electrode tab and the battery pack to be reduced in the length direction and/or the width direction of the battery pack.

The electrode tab may include an electrode extension portion extending from the electrode assembly in a longitudinal direction of the battery cell and within the terrace portion, a first electrode bending portion bent at an end portion of the electrode extension portion and having a portion within the terrace portion, a second electrode bending portion bent at an end portion of the first electrode bending portion, and a third electrode bending portion bent at an end portion of the second electrode bending portion.

### BRIEF DESCRIPTION OF THE DRAWINGS

Features will become apparent to those of ordinary skill in the art by describing in detail exemplary embodiments with reference to the attached drawings, in which:
FIG. 1 illustrates a perspective view of a battery pack according to one or more embodiments of the present disclosure;
FIG. 2 illustrates an exploded perspective view of a battery pack according to one or more embodiments of the present disclosure;
FIG. 3 illustrates a rear surface of a battery pack of FIG. 1 according to one or more embodiments of the present disclosure;
FIG. 4 illustrates an upper surface of a battery pack from which a second tape is removed according to one or more embodiments of the present disclosure;
FIGS. 5 to 8 illustrate an assembled state of a battery pack according to one or more embodiments of the present disclosure;
FIG. 9 illustrates a cross-section of a battery pack according to one or more embodiments of the present disclosure;
FIG. 10 illustrates a state in which a portion of a protection circuit module is on a battery cell according to one or more embodiments of the present disclosure; and
FIG. 11 illustrates another cross-section of a battery pack according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that if a layer or element is referred to as being "on" another layer or substrate, it can be directly on the other layer or substrate, or intervening layers may also be present. Further, it will be understood that if a layer is referred to as being "under" another layer, it can be directly under, and one or more intervening layers may also be present. In addition, it will also be understood that if a layer is referred to as being "between" two layers, it can be the only layer between the two layers, or one or more intervening layers may also be present. Like reference numerals refer to like elements throughout.

The present embodiments may have different forms and should not be construed as being limited to the descriptions set forth herein. Accordingly, the embodiments may merely be described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Embodiments may be understood with reference to the description and drawings of the disclosure. The described embodiments have various modifications, may be implemented in other forms, and are not limited to the embodiments described in the description. In addition, some or all of features of each of various embodiments may be combined with each other. The embodiments may be implemented independently of each other or may be implemented in connection with each other. The described embodiments are provided as examples to enable the disclosure to be thorough and complete and are intended to fully convey the spirit of the disclosure to one of ordinary skill in the art to which the disclosure belongs. Therefore, processes, elements, and techniques not required by one of ordinary skill in the art may not be described for the full understanding of embodiments.

Unless otherwise stated throughout the accompanying drawings and description, the same reference numerals, characters, or combinations thereof indicate the same components, and thus, the same descriptions thereof are omitted. In addition, parts that are not related to the description are omitted in order to clearly describe the disclosure.

The relative sizes of elements, layers, and regions in the drawings may be exaggerated for clarity. The use of hatching and/or shading in the accompanying drawings is generally provided to clarify a boundary between adjacent elements. Therefore, the presence or absence of hatching or shading does not indicate desirable forms or requirements for certain materials, material characteristics, dimensions, ratios, commonality among picture elements, and/or other characteristics, attributes, etc. of elements, unless specified.

Various embodiments are described herein with reference to embodiments and/or cross-sectional examples that are schematic examples of intermediate structures. Therefore, the shapes of the drawings may vary, for example, as results of manufacturing techniques and/or tolerances. In addition, the detailed structural or functional description provided herein is merely an example for describing embodiments according to the concept of the disclosure. Therefore, the embodiments provided herein should not be construed as being limited to shapes of illustrated regions and include, for example, variations in shapes according to manufacturing.

The regions shown in the drawings are schematic in nature and shapes thereof are not intended to illustrate actual shapes of device regions and are not intended to limit the actual shapes. In addition, as recognized by one of ordinary skill in the art, the described embodiments may be modified in various ways without departing from the scope of the disclosure.

A number of particular details are presented herein to provide a full understanding of various embodiments. However, various embodiments may be implemented without these particular details or including one or more details. In other cases, well-known structures and devices are illustrated in the form of block diagrams to avoid unnecessarily obscuring various embodiments.

Spatially relative terms such as "under", "above", "lower", and "upper" may be used to easily describe the relationship between one element or feature and another element or feature, as illustrated in the drawings. The spatially relative terms are intended to include various directions of a device in use or operation in addition to directions shown in the drawings. For example, if a device in the drawing is turned over, another element or feature described as "under" or "lower" is directed "above" of another element or feature. Therefore, example terms "under" and "lower" may include both above and under directions. The device may be directed in a different direction (e.g., in a 90° rotation or in a different direction), and the spatially relative description used herein should be interpreted accordingly. Likewise, if a first portion is referred to as being arranged "above" a second portion, this means that the first portion is arranged above or under the second portion.

In addition, the expression "viewed from a plane" indicates a case where an object is viewed from above, and the expression "in a schematic cross-sectional view" indicates a case where an object is cut vertically and taken as a schematic cross-section. The term "viewed from the side" indicates that a first object may be above, under, or on the side surface of a second object and the opposite case may be possible. In addition, the term "overlapping" may include layers, stacks, surfaces, extension, covering, or partially covering, or any other suitable term that may be understood and comprehended by one of ordinary skill in the art. The expression "does not overlap" may include the meaning such as "apart from" or "spaced apart from" and any other suitable equivalents recognized and understood by one of ordinary skill in the art. The terms "face" and "surface" may indicate that a first object may directly or indirectly face a second object. If a third object is present between the first object and the second object, it will be understood that the first object and the second object face each other, but oppose each other indirectly.

It will be understood that if an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, the term "formed", "connected" or "coupled" may collectively refer to a direct or indirect combination or connection and an integral or non-integral combination or connection of elements, layers, regions, or components so that one or more elements, layers, regions, or components may be present. For example, if an element, layer, region, or component is referred to as being "electrically connected" or "electrically coupled" to another element, layer, region, or component, it may be directly electrically connected or coupled to the other element, layer, region, or component, or another element, layer, region or component may be present. However, "direct connection" or "direct combination" indicates that one component is directly connected to or combined with another component or is on another component, without an intervening component. In addition, as used herein, if a portion of a layer, film, region, guide plate, or the like is formed on another portion, a formation direction is not limited to an upper direction, but the portion is formed on a side surface of or under the other portion. In contrast, if a portion of a layer, film, region, guide plate, or the like is formed "under" another portion, the portion is "just underneath" the other portion, and an intervening portion is present between the portion and the other portion. Meanwhile, other expressions describing the relationship between components, such as "between," "right between," or "adjacent to", and "right adjacent to" may be interpreted similarly. In addition, if an element or layer is referred to as being between two elements or layers, this may be the only element between the two elements or layers, or another element may be present therebetween.

For the purposes of the description, the expressions such as "at least one" or "anyone" do not limit the order of individual elements. For example, "at least one of X, Y, and Z", "at least one of X, Y, or Z", and "at least one selected from the group consisting of X, Y, and Z" may include any combination of two or more of X alone, Y alone, Z alone, and two or more of X, Y, and Z. Similarly, the expressions such as "at least one of A and B" and "at least one of A or B" may include A, B, or, A and B. As used herein, the term "and/or" generally includes all combinations of one or more related list items. For example, the expressions such as "A and/or B" may include A, B, or A and B.

The terms "first", "second", "third", etc. may be used herein to describe various elements, components, regions, layers, and/or cross-sections, but these elements, components, regions, layers, and/or cross-sections are not limited by these terms. These terms are used to distinguish one element, component, region, layer, or cross-section from another element, component, region, layer, or cross-section. Therefore, a first element, component, region, layer, or cross-section described below may be referred to as a second element, component, region, layer, or cross-section without departing from the spirit and scope of the disclosure. Describing an element as a "first" element may not require or imply the presence of a second element or another element. The terms "first", "second", etc. may be used herein to distinguish between different categories or sets of elements. In order to express clearly, the terms "first", "second", etc. may refer to a "first category (or a first set)", a "second category (or a second set)", and the like, respectively.

The terms used herein are used only to describe particular embodiments and are not intended to limit the disclosure. As used herein, a singular expression is intended to include a plural expression, and the plural expression is also intended to include a singular form unless the context clearly indicates otherwise. The terms "comprise", "include", and "have" mean specifying the presence of specified features, integers, and steps if used herein. These expressions do not preclude the presence or addition of one or more other functions, steps, operations, components, and/or groups thereof.

If one or more embodiments may be implemented differently, a particular process order may be performed differently from the order described. For example, two processes described in succession may be performed substantially simultaneously or in the opposite order to the order described.

The terms "substantially", "about", "approximately", and similar terms are used not as terms of degree but as terms of approximation and indicate that the terms satisfy the range of intrinsic deviations of measured or calculated values (e.g., the range of deviations due to limitations of a measurement system). For example, "about" may mean within one or more standard deviations or within t30 %, 20 %, 10 %, and 5 % of stated values.

Unless otherwise defined, all terms used herein, including technical or scientific terms, have the same meaning as those generally understood by one of ordinary skill in the art to which the disclosure belongs. Terms, such as those defined in commonly used dictionaries, should be interpreted as having a meaning that is consistent with their meaning in the context of the relevant art and will not be interpreted in an idealized or overly formal sense unless expressly so defined herein.

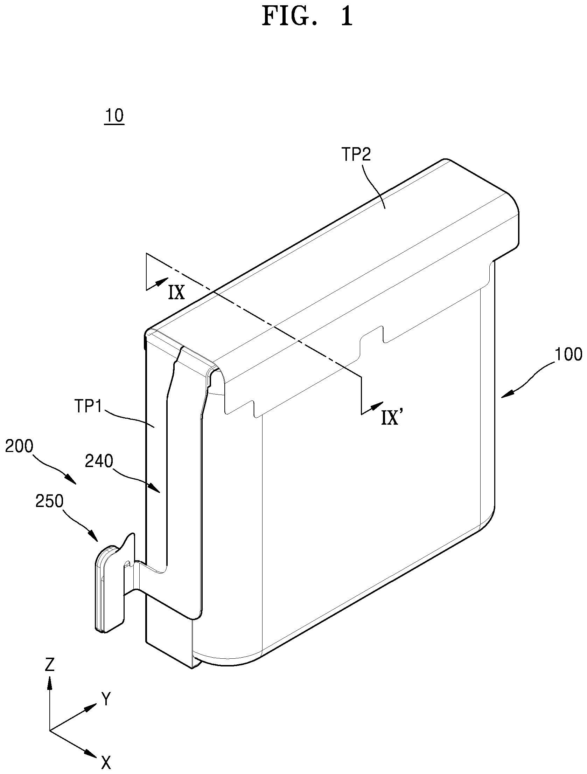

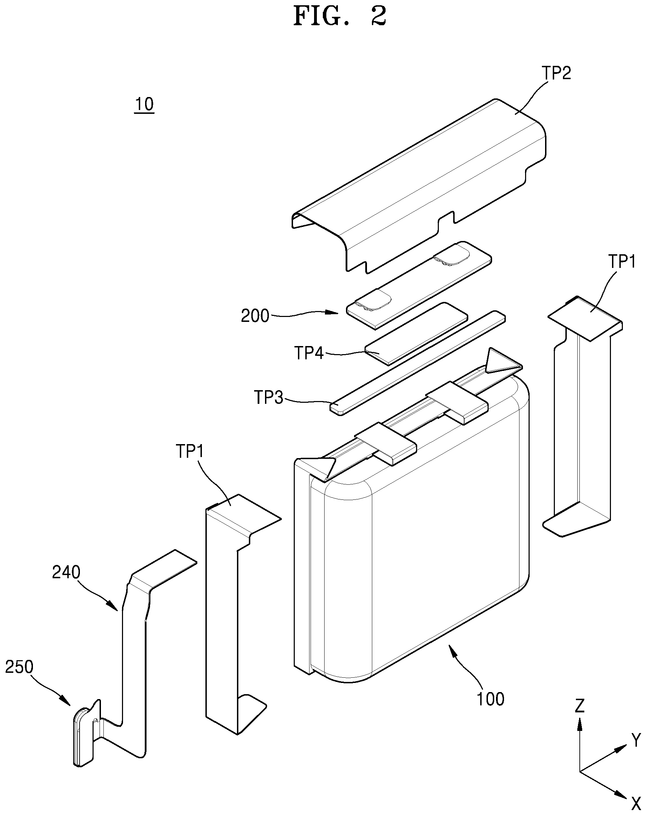

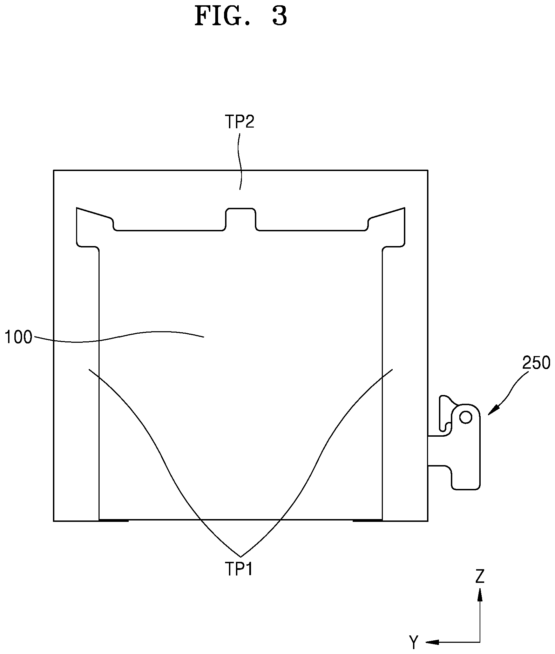

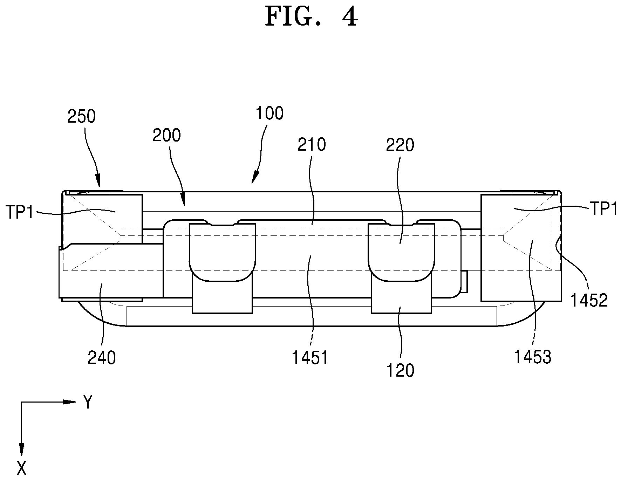

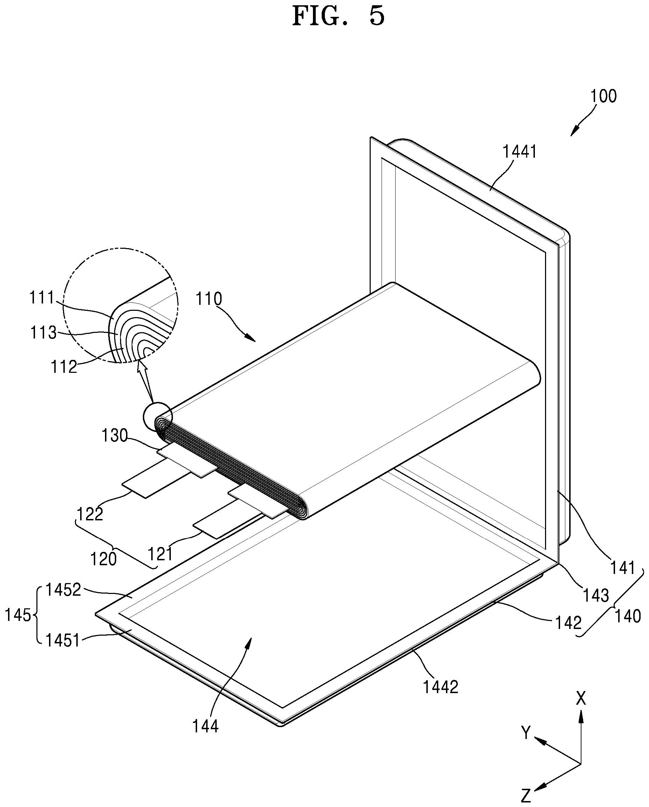

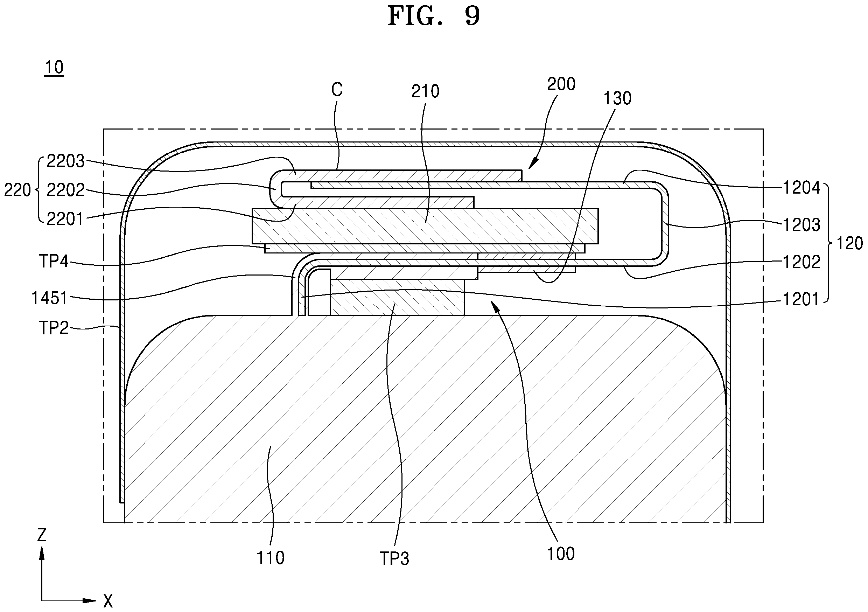

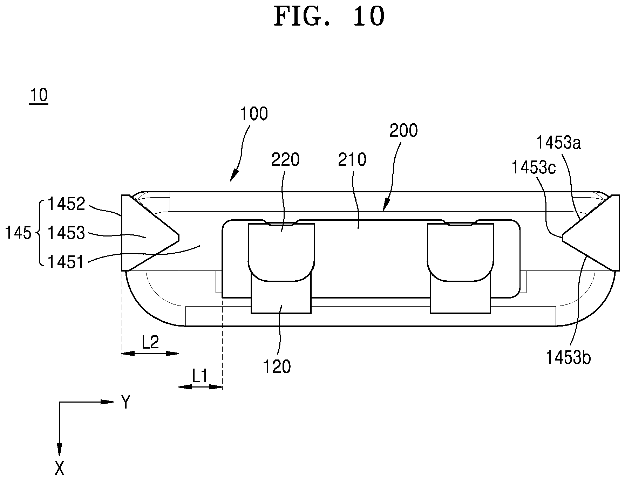

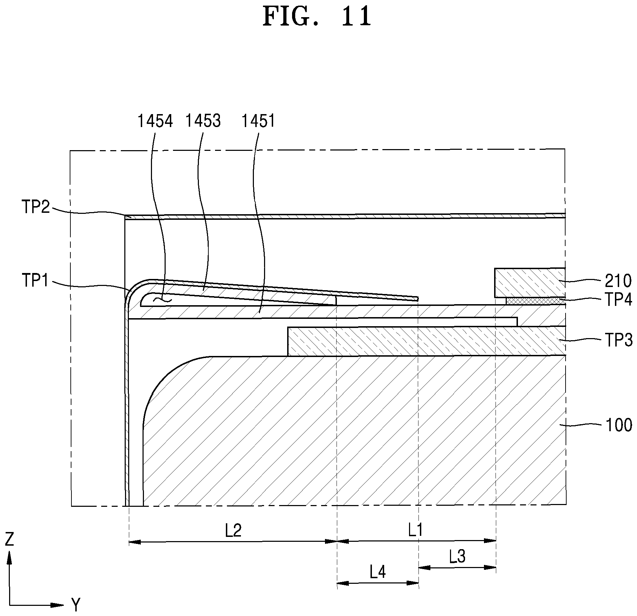

FIG. 1 illustrates a perspective view of a battery pack 10 according to one or more embodiments, FIG. 2 illustrates an exploded perspective view of the battery pack 10 according to one or more embodiments, FIG. 3 illustrates a rear surface of the battery pack 10 according to one or more embodiments, FIG. 4 illustrates an upper surface of the battery pack 10 from which a second tape TP2 is removed according to one or more embodiments, FIGS. 5 to 8 illustrate an assembled state of the battery pack 10 according to one or more embodiments, and FIG. 9 illustrates one cross-section of the battery pack 10 according to one or more embodiments. For example, FIG. 9 illustrates a cross-section taken along a line IX-IX' of FIG. 1. FIG. 10 illustrates a state in which a portion of a protection circuit module 200 is on a battery cell 100 according to one or more embodiments, and FIG. 11 illustrates another cross-section of the battery pack 10 according to one or more embodiments. For example, FIG. 11 illustrates a cross-section of the battery pack 10 taken parallel to a YZ plane.

The battery pack 10 may be a pouch-type battery and may include the battery cell 100 and the protection circuit module 200. For example, as illustrated in FIG. 1, the battery pack 10 may have a shape having flat front and rear surfaces (e.g., both surfaces parallel to the plane YZ of FIG. 1). At least a portion of the battery pack 10 may have a curved shape. For example, both side surfaces of the battery pack 10 (e.g., one surface on which an extension portion 240 is placed and an opposite surface thereto in FIG. 1) may have curved shapes. The battery pack 10 may have a dimension in which a thickness direction (e.g., an X-axis direction of FIG. 1) may be less than a width direction (e.g., a Y-axis direction of FIG. 1).

The battery pack 10 includes the battery cell 100 and the protection circuit module 200 connected to the battery cell 100 and including a substrate 210 (see, e.g., FIG. 4), the battery cell 100 includes an electrode assembly 110 (e.g., see FIG. 5) and a housing 140 surrounding the electrode assembly 110, the housing 140 includes a terrace portion 1451 corresponding to a short side portion of the battery cell 100, a pair of side sealing portions 1452 respectively connected to both ends of the terrace portion 1451 and corresponding to a pair of long side portions of the battery cell 100, and a pair of corner portions 1453 (see, e.g., FIG. 4) at connection portions between the pair of side sealing portions 1452 and the terrace portion 1451 if the pair of side sealing portions 1452 and the terrace portion 1451 are each folded and the connection portions between the terrace portion 1451 and the pair of side sealing portions 1452 are unfolded or uncut, and the substrate 210 is between the pair of corner portions 1453.

The battery pack 10 may include one or more tapes for supporting and protecting the battery cell 100 and the protection circuit module 200. The tapes may be attached to at least one of the battery cell 100 and the protection circuit module 200. For example, the tapes may be on an outer surface of the battery cell 100, between the battery cell 100 and the protection circuit module 200, or inside the protection circuit module 200. The tapes may be components distinguished from an insulating tape 130 of the battery cell 100, though they may include an insulating and/or fire retardant material.

The battery cell 100 may include the electrode assembly 110, an electrode tab 120, the insulating tape 130, and the housing 140.

The electrode assembly 110 may include a first electrode plate 111 and a second electrode plate 112 having opposite polarities, and a separator 113 between the first electrode plate 111 and the second electrode plate 112. The electrode assembly 110 may be a roll type formed by rolling the first electrode plate 111, the second electrode plate 112, and the separator 113. In some embodiments, the electrode assembly 110 may have a winding axis (e.g., a central axis around which the first electrode plate 111, the second electrode plate 112, and the separator 113 are rolled) parallel to a longitudinal direction of the battery cell 100 (e.g., a Z-axis direction of FIG. 5). In other embodiments, the electrode assembly 110 may be formed by a plurality of first electrode plates 111, a plurality of second electrode plates 112, and a plurality of separators 113 being stacked. In still other embodiments, the electrode assembly 110 may be a mixture of a roll type and a stack type. In one or more embodiments, the first electrode plate 111 may be an anode, and the second electrode plate 112 may be a cathode. In one or more other embodiments, the first electrode plate 111 may be a cathode, and the second electrode plate 112 may be an anode.

The first electrode plate 111 may be formed by applying a first electrode active material such as graphite or carbon to a first electrode current collector plate formed of metal foil such as copper, a copper alloy, nickel, or a nickel alloy. The first electrode plate 111 may include a first uncoated portion that is a region to which the first electrode active material is not applied, and at least a portion of the first uncoated portion may include a first electrode tab 121. The first electrode tab 121 may operate as a path for a current between the first electrode plate 111 and a first current collector. In some embodiments, the first electrode tab 121 may be formed by cutting the first electrode plate 111 in advance if assembling the first electrode plate 111 so that at least a portion of the first electrode tab 121 protrudes to the outside of the electrode assembly 110. In other embodiments, without a separate cutting process, the first electrode tab 121 may further protrude to the outside of the electrode assembly 110 than the separator 113.

The second electrode plate 112 may be formed by applying a second electrode active material such as transition metal oxide to a second electrode current collector plate formed of metal foil such as aluminum or an aluminum alloy. The second electrode plate 112 may include a second uncoated portion that is a region to which a second electrode active material is not applied, and at least a portion of the second uncoated portion may include a second electrode tab 122. The second electrode tab 122 may operate as a path for a current flow between the second electrode plate 112 and a second current collector. In some embodiments, the second electrode tab 122 may be created by cutting the second electrode plate 112 in advance if manufacturing the second electrode plate 112 so that at least a portion of the second electrode tab 122 protrudes to the outside of the electrode assembly 110. In other embodiments, without a separate cutting process, the second electrode tab 122 may protrude to the electrode assembly 110 further than the separator 113.

The electrode assembly 110 may be surrounded by the housing 140. For example, as shown in FIG. 5, the electrode assembly 110 may have a smaller size than the housing 140 and may be accommodated in the housing 140. If the electrode assembly 110 is accommodated within the housing 140, the electrode tab 120 connected to the electrode assembly 110 may protrude to the outside of the housing 140 to be connected to the protection circuit module 200.

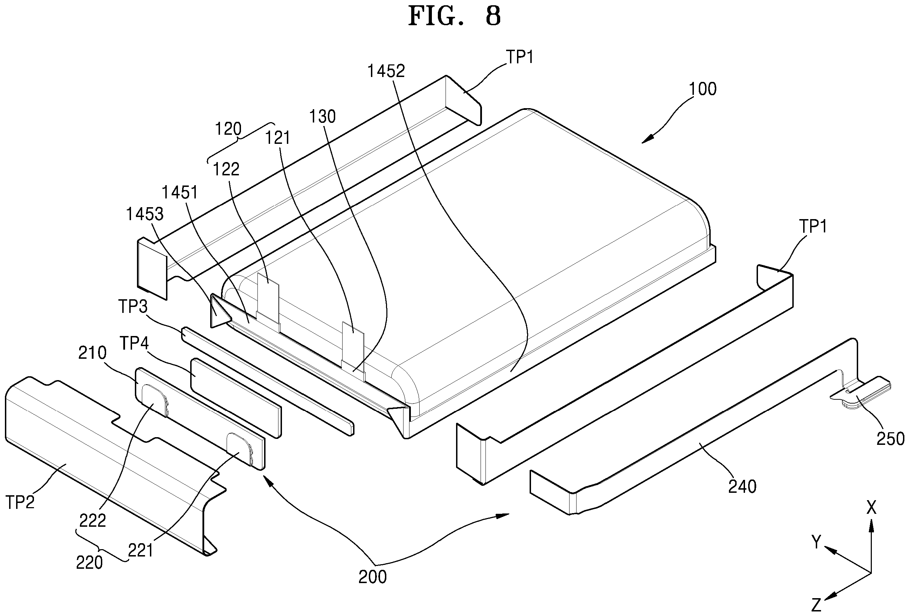

The electrode tab 120 may be connected to the electrode assembly 110. One end of the electrode tab 120 may extend from the electrode assembly 110. The electrode tab 120 may be withdrawn from the terrace portion 1451 of the housing 140 while the housing 140 is coupled (e.g., while the first housing 141 and the second housing 142 are in contact with each other). For example, as shown in FIG. 5, the electrode tab 120 may include the first electrode tab 121 and the second electrode tab 122 having different polarities and may be electrically connected to each of the first electrode plate 111 and the second electrode plate 112, respectively. In addition, the electrode tab 120 may be connected to a substrate tab 220 (see, e.g., FIG. 4). For example, the first electrode tab 121 may be connected to a first substrate tab 221 (see, e.g., FIG. 8), and the second electrode tab 122 may be connected to a second substrate tab 222. The electrode tab 120 may be connected to the substrate tab 220 through, for example, welding, bolting, or the like. The electrode tab 120 may include a conductive material such as metal. The first electrode tab 121 and the second electrode tab 122 may be spaced apart from each other, and the first current collector and the second current collector may be welded and connected to the first electrode tab 121 and the second electrode tab 122, respectively.

The insulating tape 130 may be attached to the electrode tab 120 to provide insulation and sealing between the electrode tab 120 and the housing 140. For example, as shown in FIG. 5, the insulating tape 130 may surround at least a portion of the electrode tab 120. The insulating tape 130 may be in contact with the electrode assembly 110 or may be adjacent to the electrode assembly 110. For example, as illustrated in FIG. 9, the insulating tape 130 may be outside the terrace portion 1451.

The electrode tab 120 may be bent one or more times. While connected to the substrate tab 220 of the protection circuit module 200, the electrode tab 120 may not extend straight in a longitudinal direction of the battery cell 100 (e.g., in the Z-axis direction of FIG. 1) but may be bent one or more times. For example, as shown in FIGS. 5 and 8, respectively, the electrode tab 120 may extend straight in the longitudinal direction of the battery cell 100 and then may be bent in a thickness direction of the battery cell 100 (e.g., in the X-axis direction of FIG. 8). The terrace portion 1451 may also be bent together in the same direction as the electrode tab 120. While the electrode tab 120 is bent, a fourth tape TP4 and the protection circuit module 200 may be sequentially thereon. Also, the electrode tab 120 may be bent again in the thickness direction of the battery cell 100 toward the substrate tab 220. In some embodiments, the electrode tab 120 may include a plurality of bending portions, and at least a portion of the protection circuit module 200 such as the substrate 210 may be between the plurality of bending portions. The electrode tab 120 may include the bending portions, and thus, an overall length of the battery cell 100 and the battery pack 10 may be reduced.

As shown in FIG. 9, for example, the electrode tab 120 may include an electrode extension portion 1201, a first electrode bending portion 1202, a second electrode bending portion 1203, and a third electrode bending portion 1204.

The electrode tab 120 may include the electrode extension portion 1201 that extends from the electrode assembly 110 in the longitudinal direction of the battery cell 100 and may be within the terrace portion 1451, the first electrode bending portion 1202 which may be bent at an end portion of the electrode extension portion 1201 and whose portion is within the terrace portion 1451, the second electrode bending portion 1203 which may be bent at an end portion of the first electrode bending portion 1202, and the third electrode bending portion 1204 which may be bent at an end portion of the second electrode bending portion 1203.

The electrode extension portion 1201 may be a portion at which the electrode tab 120 extends from the electrode assembly 110. For example, as shown in FIG. 9, the electrode extension portion 1201 may extend from the electrode assembly 110, be inserted into the terrace portion 1451, and extend in the longitudinal direction of the battery cell 100 (e.g., in a Z-axis direction of FIG. 9).

The first electrode bending portion 1202 may extend from the end portion of the electrode extension portion 1201 in a direction crossing a direction in which the electrode extension portion 1201 extends. For example, the first electrode bending portion 1202 may be bent at an upper end of the electrode extension portion 1201 to extend in the thickness direction of the battery cell 100 (e.g., in an X-axis direction of FIG. 9). For example, the first electrode bending portion 1202 may extend perpendicular to the electrode extension portion 1201. The fourth tape TP4 may be above the first electrode bending portion 1202. A portion of the first electrode bending portion 1202 may be within the terrace portion 1451, and a portion of the first electrode bending portion 1202 may be surrounded by the insulating tape 130. Another portion of the first electrode bending portion 1202 may be exposed to the outside of the terrace portion 1451 and the insulating tape 130. The first electrode bending portion 1202 may be spaced apart from an upper surface of the electrode assembly 110 by a length of the electrode extension portion 1201. A third tape TP3 may be in a space between the first electrode bending portion 1202 and the electrode assembly 110.

The second electrode bending portion 1203 may extend from the end portion of the first electrode bending portion 1202 in a direction crossing the direction in which the first electrode bending portion 1202 extends. For example, the second electrode bending portion 1203 may be bent at the end portion of the first electrode bending portion 1202 (e.g., a right end portion in FIG. 9) and extend in the longitudinal direction of the battery cell 100 (e.g., in the Z-axis direction of FIG. 9). For example, the second electrode bending portion 1203 may extend perpendicular to the first electrode bending portion 1202. A length of the second electrode bending portion 1203 may be larger than a length of the electrode extension portion 1201. The fourth tape TP4 may be above the first electrode bending portion 1202.

The second electrode bending portion 1203 may be between the substrate 210 and a side surface of the second tape TP2 in the width direction of the battery pack 10 (e.g., in an X-axis direction of FIG. 9). The second electrode bending portion 1203 may be spaced apart from each of the substrate 210 and the side surface of the second tape TP2 and thus may not interfere with the substrate 210 and the second tape TP2 even if an external impact is applied. The second electrode bending portion 1203 may be between the upper surface of the battery cell 100 and an upper surface of the second tape TP2 in a longitudinal direction of the battery pack 10 (e.g., in the Z-axis direction of FIG. 9). The second electrode bending portion 1203 may be spaced apart from each of the upper surface of the battery cell 100 and the upper surface of the second tape TP2 and may not interfere with the battery cell 100 and the second tape TP2 even if an external impact is applied.

The third electrode bending portion 1204 may extend from the end portion of the second electrode bending portion 1203 in a direction crossing the direction in which the second electrode bending portion 1203 extends. For example, the third electrode bending portion 1204 may be bent at an upper end of the second electrode bending portion 1203 to extend in the thickness direction of the battery cell 100. For example, the third electrode bending portion 1204 may extend perpendicular to the second electrode bending portion 1203. The third electrode bending portion 1204 may be bent from the second electrode bending portion 1203 toward the first electrode bending portion 1202. At least a portion of the first electrode bending portion 1202 and a portion of the third electrode bending portion 1204 may overlap each other in the longitudinal direction of the battery cell 100. The third electrode bending portion 1204 may be above the substrate 210 of the protection circuit module 200.

The third electrode bending portion 1204 may be connected to the substrate tab 220. At least a portion of the third electrode bending portion 1204 may be inserted into the substrate tab 220 and may be in contact with the substrate tab 220. For example, a portion of an upper surface of the third electrode bending portion 1204 may be in contact with a lower surface of a second substrate bending portion 2203. Therefore, the electrode tab 120 and the substrate tab 220 may be electrically connected to each other.

The first electrode bending portion 1202 and the third electrode bending portion 1204 may be spaced apart from each other, and at least a portion of the protection circuit module 200 and a tape may be therebetween. For example, the first electrode bending portion 1202 and the third electrode bending portion 1204 extend parallel to each other (e.g., in the thickness direction of the battery cell 100 or in the X-axis direction of FIG. 9) and may be spaced apart from each other by the length of the second electrode bending portion 1203. In addition, the fourth tape TP4, the substrate 210, and a portion of the substrate tab 220 (e.g., a substrate connection portion 2201) may be between the first electrode bending portion 1202 and the third electrode bending portion 1204 which may be spaced apart from each other.

The electrode tab 120 may include one or more bending portions, and thus, dimensions of the battery cell 100 and the battery pack 10 in the longitudinal direction may be reduced. In addition, the protection circuit module 200 and the tape may be in a space formed between the plurality of bending portions of the electrode tab 120, and thus, components of the battery pack 10 may be focused in a relatively small space.

Although only the first electrode tab 121 is shown in the drawings, the second electrode tab 122 may also have the same bending structure as the first electrode tab 121 and the same connection structure with the substrate tab 220. In other words, the second electrode tab 122 may also include an electrode connection portion 1201, a first electrode bending portion 1202, a second electrode bending portion 1203, and a third electrode bending portion 1204.

The housing 140 may include a flexible material. The housing 140 may include insulating layers formed on both surfaces of a thin metal layer such as aluminum and may be formed through a forming process such as drawing. The housing 140 may accommodate the electrode assembly 110 therein, and an edge thereof may be sealed so that external foreign materials or the like do not flow into the electrode assembly 110.

The housing 140 may include the first housing 141, the second housing 142, a folding portion 143, an inner space 144, and a sealing portion 145.

Each of the first housing 141 and the second housing 142 may accommodate the electrode assembly 110 therein and may be folded with respect to each other around the folding portion 143. The first housing 141 may include a first inner space 1441, and the second housing 142 may include a second inner space 1442. The first housing 141 and the second housing 142 may be connected to each other through the folding portion 143. If the electrode assembly 110 is accommodated in any one of two housings, the other housing may cover the corresponding housing, and thus, the inner space 144 accommodating the electrode assembly 110 may be formed. For example, the folding portion 143 may be adjacent to a surface opposite to a surface of the electrode assembly 110 on which the electrode tab 120 is formed.

The sealing portion 145 may be at each of the first housing 141 and the second housing 142. The sealing portion 145 may be along an outer edge of the first housing 141 and an outer edge of the second housing 142. For example, as shown in FIG. 5, the sealing portion 145 may be on a remaining short side portion and a pair of long side portions of each of the first housing 141 and the second housing 142 and a short side portion of each of the first housing 141 and the second housing 142 on which the folding portion 143 is formed. While the first housing 141 and the second housing 142 are folded, the sealing portion 145 included in the first housing 141 and the sealing portion 145 included in the second housing 142 may be in contact with each other to seal a space between the first housing 141 and the second housing 142.

The sealing portion 145 may include the terrace portion 1451, a side sealing portion 1452, and a corner portion 1453.

The terrace portion 1451 is a portion from which the electrode tab 120 is withdrawn and may be formed to correspond to (to be aligned with) any one of a pair of short side portions of the housing 140. For example, the terrace portion 1451 may be formed adjacent to one surface of the electrode assembly 110 from which the electrode tab 120 extends and may be formed at an upper portion of the battery cell 100 in the longitudinal direction of the battery cell 100. The terrace portion 1451 may seal the first housing 141 and the second housing 142 while extending in a direction crossing the electrode tab 120. The terrace portion 1451 may surround at least a portion of the electrode tab 120. For example, as shown in FIG. 9, the terrace portion 1451 may surround a portion of the electrode tab 120 extending from the electrode assembly 110. In other words, the terrace portions 1451 of the first housing 141 and the second housing 142 may be in contact with each other, and the electrode connection portion 1201 and the first electrode bending portion 1202 of the electrode tab 120 may pass through a contact surface between the terrace portions 1451. The electrode tab 120 may be firmly supported by the terrace portion 1451.

The pair of side sealing portions 1452 may extend in a direction intersecting the terrace portion 1451. For example, the pair of side sealing portions 1452 may correspond to (be aligned with) a pair of long side portions of the housing 140. Each of the pair of side sealing portions 1452 may be connected to an end portion of the terrace portion 1451 and an end portion of the folding portion 143. The terrace portion 1451 and the pair of side sealing portions 1452 may perpendicularly intersect each other.

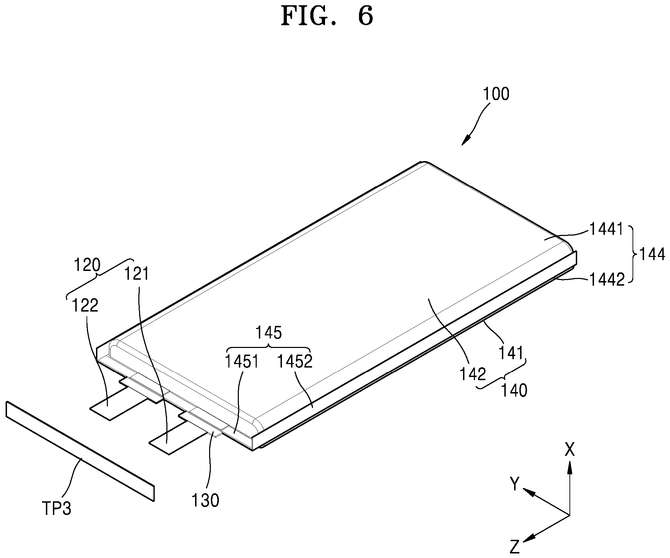

The terrace portion 1451 and the pair of side sealing portions 1452 may be folded. For example, as shown in FIG. 6, while the first housing 141 and the second housing 142 are folded, the pair of side sealing portions 1452 may be on a pair of long side portions of the battery cell 100 may each be folded upwards (e.g., in an X-axis direction of FIG. 6). The terrace portion 1451 may be folded upwards while the pair of side sealing portions 1452 are folded. In other words, the pair of side sealing portions 1452 may be folded upwards toward both sides of the battery cell 100, and then the terrace portion 1451 may be folded toward one surface of the battery cell 100 having the electrode tab 120 thereon. Accordingly, the pair of corner portions 1453 may be created if a portion between both ends of the terrace portion 1451 and the pair of side sealing portions 1452 is folded.

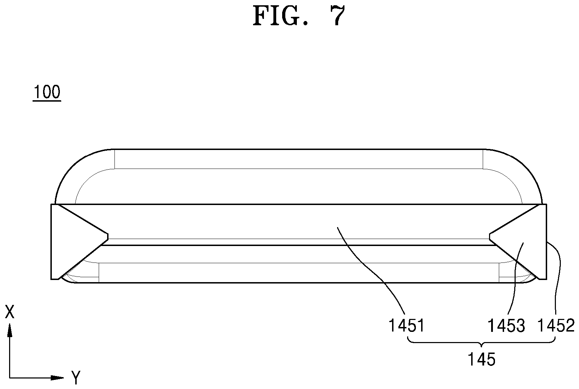

The pair of corner portions 1453 may be between the terrace portion 1451 and the side sealing portion 1452. The corner portions 1453 may be between the side sealing portion 1452 and the terrace portion 1451 if the side sealing portion 1452 and the terrace portion 1451 are folded while a connection portion between the terrace portion 1451 and the side sealing portion 1452 is unfolded or uncut. For example, the terrace portion 1451 and the pair of side sealing portions 1452 may perpendicularly intersect each other, and each connection portion therebetween may be unfolded or uncut (i.e., an edge of the connection portion may be unfolded or uncut). In this state, the pair of side sealing portions 1452 may be respectively folded toward side surfaces of the battery cell 100. For example, the pair of side sealing portions 1452 may be respectively folded upwards, and then the terrace portion 1451 may be folded toward the surface from which the electrode tab 120 of the battery cell 100 is withdrawn. Therefore, a portion of the terrace portion 1451 may be folded on the surface from which the electrode tab 120 of the battery cell 100 is withdrawn (e.g., a front surface of the battery cell 100 of FIG. 7), and the other portion of the terrace portion 1451 may be folded inside the pair of side sealing portions 1452. Subsequently, the connection portion between the pair of side sealing portions 1452 and the terrace portion 1451 may be folded on the surface of the battery cell 100 from which the electrode tab 120 is withdrawn, and thus, the pair of corner portions 1453 may be as shown in FIG. 7.

The protection circuit module 200 may be between the pair of corner portions 1453. For example, as shown in FIG. 4, the substrate 210 of the protection circuit module 200 may be between the pair of corner portions 1453. The pair of corner portions 1453 may be respectively spaced apart from both ends of the substrate 210 (e.g., both ends of the substrate 210 in the longitudinal direction or both ends of the substrate 210 in a Y-axis direction of FIG. 4). In other words, the pair of corner portions 1453 may not overlap the substrate 210. Accordingly, the overall length of the battery pack 10 corresponding to the pair of corner portions 1453 may be reduced.

The corner portion 1453 may be spaced apart from an end portion of the substrate 210 by a distance L1 (see FIG. 10). For example, the pair of corner portions 1453 may be respectively spaced apart from both ends of the substrate 210 by the distance L1. The distance L1 may be a distance between an inner end portion of the corner portion 1453 (e.g., an inner end portion of the battery cell 100 in the width direction) and the end portion of the substrate 210. The corner portions 1453 may each have a total length L2. Here, the length L2 may be a distance from an outer surface of the side sealing portion 1452 to the end portion of the corner portion 1453. The length L2 may be greater than the distance L1.

Each of the corner portions 1453 may include a first edge 1453a, a second edge 1453b, and a connection portion 1453c.

The first edge 1453a may be a portion of a portion formed by the connection portion between the terrace portion 1451 and the side sealing portion 1452 being folded, and may be, for example, one end portion of the side sealing portion 1452. The second edge 1453b may be a portion of a portion formed by the connection portion between the terrace portion 1451 and the side sealing portion 1452 being folded and may be, for example, a portion of a boundary between the terrace portion 1451 and the side sealing portion 1452. While the corner portion 1453 may be folded on the terrace portion 1451, the second edge 1453b may be opposite to the first edge 1453a. The connection portion 1453c may connect the first edge 1453a to the second edge 1453b and may be a portion closest to the substrate 210. The connection portion 1453c may be a contact point or short edge where end portions of the first edge 1453a and the second edge 1453b meet. For example, as shown in FIG. 10, the connection portion 1453c may be an edge having both ends connected to an end portion of the first edge 1453a and an end portion of the second edge 1453b, respectively, and having a length less than the first edge 1453a and the second edge 1453b.

At least a portion of each of the first edge 1453a, the second edge 1453b, and the connection portion 1453c may be on the terrace portion 1451. Therefore, the corner portion 1453 may be stably supported by the terrace portion 1451. For example, as shown in FIG. 10, if the corner portion 1453 is folded on the terrace portion 1451, the first edge 1453a and the connection portion 1453c may be entirely on the terrace portion 1451. Also, a partial section of the second edge 1453b may be on the terrace portion 1451. Therefore, the corner portion 1453 may be more stably supported by the terrace portion 1451.

The first edge 1453a, the second edge 1453b, and the connection portion 1453c may together have a triangular shape. For example, the first edge 1453a and the second edge 1453b may become both sides of a triangle, the connection portion 1453c at which one end of the first edge 1453a and one end of the second edge 1453b are connected to each other may become an apex of the triangle, a virtual line formed by extending the other end of the first edge 1453a and the other end of the second edge 1453b may become a base of the triangle, and thus the first edge 1453a, the second edge 1453b, and the connection portion 1453c may have a substantially triangular shape.

At least a portion of each of the first edge 1453a, the second edge 1453b, and the connection portion 1453c may be on the terrace portion 1451, at the same time, the first edge 1453a, the second edge 1453b, and the connection portion 1453c have a substantially triangular shape, and thus an area of the corner portion 1453 protruding outside the terrace portion 1451 of the corner portion 1453 may be minimized. Alternatively, the corner portion 1453 may have a shape with a width gradually decreasing toward both ends of the substrate 210.

A portion of each corner portion 1453, which may be folded toward the terrace portion 1451, may include an externally curved portion. For example, as shown in FIG. 11, an outer side portion of the corner portion 1453 (or a folded portion of the corner portion 1453) may have a convexly curved shape. The sealing portion 145 may further include a space 1454. For example, as shown in FIG. 11, the space 1454 may be an empty area formed between an upper surface of the terrace portion 1451 and the corner portion 1453. The corner portion 1453 may extend along an outer contour of the space 1454 and the folded portion of the corner portion 1453 may include a curved shape, and thus, the first tape TP1 covering the corner portion 1453 may be stably attached onto the corner portion 1453.

The protection circuit module 200 may control charging and discharging operations of the battery cell 100 to prevent over-discharging and over-charging of the battery cell 100. The protection circuit module 200 may be connected to the battery cell 100 via the electrode tab 120. The protection circuit module 200 may be on the battery cell 100 and may not be in direct contact with another portion of the battery pack 10 by a tape.

The protection circuit module 200 may include the substrate 210, the substrate tabs 220, an extension portion 240, and a connector 250.

The substrate 210 may support other components (e.g., the substrate tab 220, the extension portion 240, and the like) of the protection circuit module 200 and may include a circuit pattern and a component C (see FIG. 9). The substrate 210 may be a printed circuit board (PCB or a FPCB) and may be on the battery cell 100. For example, as shown in FIG. 9, the substrate 210 may be between the fourth tape TP4 and the substrate tab 220. The substrate 210 may have a rectangular shape extending in the width direction of the battery cell 100 (e.g., in a Y-axis direction of FIG. 4) .

The substrate 210 may be between two corner portions 1453. For example, both ends of the substrate 210 may be respectively spaced apart from the pair of corner portions 1453 by the distance L1. In addition, both ends of the substrate 210 may be respectively spaced apart from a pair of first tapes TP1 by the distance L3.

One or more substrate tabs 220 may be on the substrate 210 and may be connected to the electrode tabs 120. The substrate tab 220 may be a conductor that may be electrically connected to the electrode tab 120 and may be, for example, nickel, copper, aluminum, or the like. For example, as shown in FIG. 8, the first and second substrate tabs 221 and 222, respectively, may be on an upper surface of the substrate 210 and may be spaced apart from each other. The number of substrate tabs 220 may be the same as the number of electrode tabs 120. The substrate tab 220 may be formed at a location corresponding to the electrode tab 120 and may be connected to the electrode tab 120 through welding or the like to electrically connect the battery cell 100 to the protection circuit module 200. The substrate tab 220 may include a first substrate tab 221 connected to the first electrode tab 121 and a second substrate tab 222 connected to the second electrode tab 122.

The substrate tab 220 may include a plurality of bending portions. For example, the substrate tab 220 may include the substrate connection portion 2201, a first substrate bending portion 2202, and a second substrate bending portion 2203. For example, as shown in FIG. 9, the substrate connection portion 2201 may be on the upper surface of the substrate 210 and may extend in a width direction of the substrate 210 (or in the thickness direction of the battery cell 100 or in the X-axis direction of FIG. 9). The substrate connection portion 2201 may extend in an opposite direction to a direction in which the first electrode bending portion 1202 extends.

The first substrate bending portion 2202 may be bent at an end portion of the substrate connection portion 2201 and extend in a different direction from the substrate connection portion 2201. For example, the first substrate bending portion 2202 may extend in a height direction of the battery cell 100 (e.g., in the Z-axis direction of FIG. 9). The first substrate bending portion 2202 may be on the substrate 210. The substrate connection portion 2201 and the second substrate bending portion 2203 may be spaced apart from each other by the first substrate bending portion 2202, and the electrode tab 120 may be inserted therebetween.

The second substrate bending portion 2203 may be bent at an end portion of the first substrate bending portion 2202 and may extend in a different direction from the first substrate bending portion 2202. For example, the second substrate bending portion 2203 may extend in the thickness direction of the battery cell 100 (e.g., in the X-axis direction of FIG. 9). At least a portion of the second substrate bending portion 2203 may overlap the substrate connection portion 2201 in the height direction of the battery cell 100. The second substrate bending portion 2203 may be connected to the electrode tab 120. For example, as shown in FIG. 9, a lower surface of the second substrate bending portion 2203 may be in contact with an upper surface of the third electrode bending portion 1204, so that the electrode tab 120 and the substrate tab 220 may be connected to each other.

Although only the first substrate tab 221 is shown in FIG. 9, the second substrate tab 222 may also have the same bending structure as the first substrate tab 221 and the same connection structure with the electrode tab 120 as the first substrate tab 221. In other words, the second substrate tab 222 may also include a substrate connection portion 2201, a first substrate bending portion 2202, and a second substrate bending portion 2203.

The extension portion 240 may connect the substrate 210 to the connector 250. For example, the extension portion 240 may have a first end in contact with the upper surface of the substrate 210 and a second end connected to the connector 250 (refer to FIGS. 1 and 8). The extension portion 240 may have a width equal to or less than a width of the protection circuit module 200 and may include a flexible material that may be deformed. The extension portion 240 may extend downwards along the side surface of the battery cell 100, and the connector 250 may be at an end portion of the extension portion 240. The connector 250 may connect the protection circuit module 200 to an external device of the battery pack 10, such as a controller or computing unit running an application.

The battery pack 10 may include a tape. The tape may be between the battery cell 100 and the protection circuit module 200 or on outer side of the battery cell 100 and/or the protection circuit module 200. The tape may be attached to one or more of the battery cell 100 and the protection circuit module 200. The tape may insulate the battery cell 100 from the protection circuit module 200 and may protect the battery cell 100 and the protection circuit module 200 from an external impact. The tape may include an insulating and/or flame-retardant material and may include, for example, Teflon. The tape may include the first tape TP1, the second tape TP2, the third tape TP3, and the fourth tape TP4.

The first tape TP1 may be attached to each of both (short) side surfaces of the battery cell 100. For example, as shown in FIG. 1, the first tape TP1 may be between the extension portion 240 of the protection circuit module 200 and the battery cell 100. The first tape TP1 may prevent the extension portion 240 from being in direct contact with the battery cell 100. An upper portion of the first tape TP1 may be on the upper surface of the battery cell 100, and a lower portion of the first tape TP1 may be on a lower surface of the battery cell 100. A pair of first tapes TP1 may be respectively attached to both side surfaces of the battery cell 100 and may respectively cover the pair of corner portions 1453.

The first tape TP1 may cover the sealing portion 145. For example, while the side sealing portion 1452 is folded, the first tape TP1 may cover an outer side of the side sealing portion 1452. Also, while the corner portion 1453 is folded on the terrace portion 1451, the first tape TP1 may cover the corner portion 1453. For example, the first tape TP1 may cover the entire corner portion 1453. For example, as shown in FIG. 11, the upper portion of the first tape TP1 may cover the corner portion 1453, and an end portion of the first tape TP1 may further protrude toward the substrate 210 than the end portion of the corner portion 1453. In other words, the pair of first tapes TP1 may be respectively spaced apart from both ends of the substrate 210. End portions of the pair of first tapes TP1 may respectively protrude further toward both ends of the substrate 210 than end portions of the pair of corner portions 1453.

Therefore, an upper surface of the corner portion 1453 may not be exposed to the outside and may be covered by the entire first tape TP1. In addition, the corner portion 1453 may be spaced apart from the substrate 210 with a sufficient space so that the first tape TP1 may be between the end portion of the corner portion 1453 and the end portion of the substrate 210. The first tape TP1 may cover the corner portion 1453 to prevent the corner portion 1453 from being unfolded or detached from the terrace portion 1451 during use of the battery pack 10.

The end portion of the first tape TP1 may be spaced apart from the end portion of the substrate 210 by a distance L3 (see FIG. 11). The end portion of the first tape TP1 may be spaced apart from an end portion of the corner portion 1453 by a distance L4. The distance L3 may be less than the distance L4 so that the first tape TP1 does not interfere with the substrate 210 while the first tape TP1 reliably covers the corner portion 1453. In other words, respective distances between the end portions of the pair of first tapes TP1 and both ends of the substrate 210 may be less than respective distances between the end portions of the pair of corner portions 1453 and the end portions of the pair of first tapes TP1. For example, the distance L3 may be 60 % to 90 % of the distance L4.

The second tape TP2 may be above the battery cell 100 to cover the protection circuit module 200 and the battery cell 100. For example, as shown in FIG. 1, the second tape TP2 may be on the protection circuit module 200 while the battery cell 100 and the protection circuit module 200 are connected to each other and may cover upper portions of a front surface and a rear surface of the battery cell 100. Therefore, as shown in FIG. 9, the second tape TP2 may surround the component C, the protection circuit module 200, and the electrode tab 120. The second tape TP2 may be spaced apart from the protection circuit module 200 while being attached to the battery cell 100.

The third tape TP3 may be on the upper end of the battery cell 100 before the electrode tab 120 and the terrace portion 1451 are folded, so that the upper end of the battery cell 100 may not be in direct contact with the electrode tab 120. For example, as shown in FIG. 6, the third tape TP3 may have a length corresponding to a width of the battery cell 100 (e.g., a Y-axis direction of FIG. 6) and may be on the upper end of the battery cell 100. In this state, the electrode tab 120 and the terrace portion 1451 may be folded toward an upper surface of the housing 140 (e.g., the first housing 141), and the side sealing portions 1452 on both sides of the housing 140 may also be folded inwards.

The fourth tape TP4 may be on the electrode tab 120 and/or the insulating tape 130. For example, as shown in FIGS. 8 and 9, the fourth tape TP4 may be thereon while the electrode tab 120 and the terrace portion 1451 are bent. The fourth tape TP4 may cover together a portion of the electrode tab 120, the terrace portion 1451, the insulating tape 130 and may secure airtightness and insulation between components.

A battery pack according to embodiments may be miniaturized by reducing a total size thereof including a length thereof. In addition, interference between other components of the battery pack and a protection circuit module may be reduced.

However, effects, which may be obtained through the disclosure, are not limited to the above-described effects, and other technical effects not mentioned may be clearly understood by one of ordinary skill in the art from the description of the disclosure above.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of ordinary skill in the art that various changes in form and details may be made without departing from the scope of the present invention as set forth in the following claims.

## Claims

1. A battery pack, comprising:
a battery cell (100); and
a protection circuit module (200) connected to the battery cell (100), the protection circuit module (200) including a substrate (210), wherein the battery cell (100) comprises:
an electrode assembly (110); and
a housing (140) surrounding the electrode assembly (110), the housing (140) comprising:
a terrace portion (1451) corresponding to a short side portion of the battery cell (100);
a pair of side sealing portions (1452) respectively connected to both ends of the terrace portion (1451) and corresponding to a pair of long side portions of the battery cell (100); and
a pair of corner portions (1453) at a connection portion (1453c) between the pair of side sealing portions (1452) and the terrace portion (1451) if the pair of side sealing portions (1452) and the terrace portion (1451) are respectively folded and the substrate (210) is between the pair of corner portions (1453).

2. The battery pack as claimed in claim 1, wherein the pair of side sealing portions (1452) are folded toward a side surface of the battery cell (100), the terrace portion (1451) is folded toward a surface of the battery cell (100) from which an electrode tab (120) is withdrawn, and the connection portion (1453c) between the terrace portion (1451) and the pair of side sealing portions (1452) is folded toward the terrace portion (1451).

3. The battery pack as claimed in one of claims 1 or 2, wherein the terrace portion (1451) and the pair of side sealing portions (1452) perpendicularly cross each other.

4. The battery pack as claimed in one of the preceding claims, wherein each corner portion (1453) of the pair of corner portions (1453) comprises:
a first edge (1453a);
a second edge (1453b) opposite to the first edge (1453a); and
a connection portion (1453c) connected to the first edge (1453a) and the second edge (1453b), wherein at least a portion of each of the first edge (1453a), the second edge (1453b), and the connection portion (1453c) is positioned on the terrace portion (1451).

5. The battery pack as claimed in claim 4, wherein the at least a portion of each of the first edge (1453a), the second edge (1453b) and the connection portion (1453c), comprises an entirety of the first edge (1453a) and an entirety of the connection portion (1453c).

6. The battery pack as claimed in one of claims 4 or 5, wherein the first edge (1453a), the second edge (1453b), and the connection portion (1453c) together have a triangular shape.

7. The battery pack as claimed in at least one of the preceding claims, wherein each of the pair of corner portions (1453) has a shape with a width gradually decreasing toward both ends of the substrate (210).

8. The battery pack as claimed in at least one of the preceding claims, wherein the pair of corner portions (1453) are folded toward the terrace portion (1451) and a folded portion of each of the corner portions has an externally curved shape, the housing (140) further comprising a space (1454) between an upper surface of the terrace portion (1451) and the pair of corner portions (1453).

9. The battery pack as claimed in at least one of the preceding claims, further comprising at least one tape (TP1, TP2, TP3, TP4) attached to at least one of the battery cell (100) and the protection circuit module (200), and wherein the at least one tape comprises a pair of first tapes (TP1) respectively attached to both side surfaces of the battery cell (100) and respectively covering the pair of corner portions (1453).

10. The battery pack as claimed in claim 9, wherein the pair of first tapes (TP1) are each spaced apart from respective ends of the substrate (210).

11. The battery pack as claimed in one of claims 9 or 10, wherein end portions of the pair of first tapes (TP1) protrude toward respective ends of the substrate (210) and protrude further than end portions of the pair of corner portions (1453).

12. The battery pack as claimed in one of claims 9 to 11, wherein a distance (L3) between an end portion of the first tape (TP1) and an end portion of the substrate (210) is less than a respective distance (L4) between an end portion of the corner portion (1453) and the end portion of the first tape (TP1).

13. The battery pack as claimed in at least one of the preceding claims, wherein the battery cell (100) further comprises an electrode tab (120) extending from the electrode assembly (110), the electrode tab (120) comprising a plurality of bending portions and at least a portion of the protection circuit module (200) is between the plurality of bending portions.

14. The battery pack as claimed in claim 13, wherein the electrode tab (120) comprises:
an electrode extension portion (1201) extending from the electrode assembly (110) in a longitudinal direction of the battery cell (100) and within the terrace portion (1451);
a first electrode bending portion (1202) bent at an end portion of the electrode extension portion (1201) and having a portion within the terrace portion (1451);
a second electrode bending portion (1203) bent at an end portion of the first electrode bending portion (1202); and
a third electrode bending portion (1204) bent at an end portion of the second electrode bending portion (1203).
